(19) Europäisches Patentamt
European Patent Office
Office européen des brevets

(11) EP 2 034 629 A1

(12) EUROPEAN PATENT APPLICATION

(43) Date of publication:
11.03.2009 Bulletin 2009/11

(51) Int Cl.:
$H04B\ 7/26^{(2006.01)}$     $H04J\ 3/06^{(2006.01)}$

(21) Application number: 07017409.9

(22) Date of filing: 05.09.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(71) Applicant: Technische Universität Kaiserslautern
67663 Kaiserslautern (DE)

(72) Inventors:
• Gotzhein, Reinhard
67661 Kaiserslautern (DE)
• Kuhn, Thomas
67657 Kaiserslautern (DE)

(74) Representative: Müller-Boré & Partner
Patentanwälte
Grafinger Strasse 2
81671 München (DE)

(54) **Method, computer program product and system for the tick synchronization of nodes in a wireless multi-hop network**

(57)     The invention relates to a method for the tick synchronization of a node of a wireless multi-hop network with at least one other node of said multi-hop network, said network comprising a plurality of nodes being arbitrarily connected, said method comprising the steps of: receiving a synchronization tick frame from a node (N1-N14), said synchronization tick frame containing a round number $n_{round}$, said round number $n_{round}$ representing the number of hops $n_{hops}$ said synchronization tick frame has performed since its generation; and determining a node reference tick $t_{syncNode}$ corresponding to a master reference tick $t_{syncMaster}$ using said predetermined round number $n_{round}$ and the start time $t_{rxTick}$ of receipt of said synchronization tick frame in said node (N1-N14).

The invention furthermore relates to a computer program product and a system for tick-synchronizing a wireless multi-hop network.

FIG. 1

EP 2 034 629 A1

**Description**

The present invention relates to methods for the tick synchronization of a node of a wireless multi-hop network with at least one other node of said multi-hop network and a system for the tick synchronization of nodes in a multi-hop network. Moreover, the present invention relates to methods for the time synchronization of a node of a wireless multi-hop network

There is a difference between tick synchronization and time synchronization. For time synchronization, two pieces of information are needed: a reference point in time and a clock value, which are both updated periodically. Tick synchronization is concerned with establishing reference points in time only - also called reference ticks - among the nodes of a network. Different from time synchronization, no clock values are exchanged. Tick synchronization is sufficient, e.g. for network-wide medium slotting, where only common reference points in time are required. Based on tick synchronization, time synchronization can be achieved by one exchange of a clock value among the nodes of a network, referring to a reference point in time.

Time synchronization is a crucial aspect for the operation of distributed systems in general, and of ad hoc networks in particular. Ad hoc networks form dynamically, and consist e.g. of a set of small, low power nodes communicating via radio links. Network-wide accurate time in ad hoc networks enables many distributed applications like e.g. data fusion in wireless sensor networks, networked control systems, duty cycling in wireless sensor networks, and multi-hop medium slotting in wireless ad hoc networks.

According to one known method for time-synchronizing such a network, the structure of the network is determined and stored. Afterwards, a tree for performing the synchronization is calculated and the synchronization is performed according to the structure given in the tree. However, if the topology of the network changes, when e.g. one node moves, the tree structure needs to be newly calculated.

According to another known method for time-synchronizing a network, each node of the network synchronizes with all nodes in the vicinity of this node. This however, can lead to high complexity and very long synchronization times as the size of the network increases. Moreover, the susceptibility for collisions in dense networks adversely affects the operability this synchronization method.

Details of known synchronization methods will be described below.

Reference Broadcast Synchronization (RBS) (J. Elson, L. Girod, D. Estrin: Fine-Grained Network Time Synchronization using Reference Broadcasts, in: Proceedings of the Fifth Symposium on Operating Systems Design and Implementation (OSDI 2002), Boston, MA, USA, December 2002) exploits the property of broadcast media that nodes within single-hop distance of a sender receive a MAC layer frame at approximately the same time. By recording the reception times of reference beacon frames and exchanging their observations, receivers can compute their mutual clock offsets. Multi-hop synchronization is achieved using time routing through clock conversion. Using statistical methods, RBS achieves very high average accuracy, which is validated by a series of experiments. RBS requires dynamic (re-)election of sender nodes with network coverage. To synchronize them, too, redundant sender nodes and a sufficiently dense network topology are needed.

The Timing-Sync Protocol for Sensor Networks (TPSN) (S. Ganeriwal, R. Kumar, M. B. Srivastava: Timing-sync Protocol for Sensor Networks, SenSys'03, Los Angeles, CA, USA, November 5-7, 2003) performs iterative sender-receiver synchronization w. r. t. one reference node, using late time-stamping. The protocol works in two phases. In the level discovery phase, reference node election and establishment of a hierarchical network structure by means of a global broadcast take place. In the (re-) synchronization phase, all nodes along this hierarchy perform a pair wise synchronization by handshakes. As shown experimentally, TPSN achieves very high average accuracy. The use of handshakes provides some protection against frame collisions and node failures.

The Tiny-Sync Protocol (TSP) (M. L. Sichitiu, C. Veerarittiphan: Simple, Accurate Time Synchronization for Wireless Networks, Proceedings of the IEEE Wireless Communications and Networking Conference (WCNC 2003), New Orleans, LA, USA, pp. 1266-1273, 2003) uses probe handshakes that are time-stamped at each send/receive point, yielding a data point. Based on collected data points, two nodes can estimate their clock offset and their clock skew within deterministic bounds. For network-wide synchronization, a (logically) hierarchical topology that determines all pairs of nodes to be synchronized has to be established. This and a high convergence delay restrict the applicability of TSP in case of node mobility.

The Time-Diffusion Protocol (TDP) (W. Su, I. Akyildiz: Time-Diffusion Synchronization Protocols for Sensor Networks, IEEE/ACM Transactions on Networking, Vol. 13, No. 2, pp. 384-397, April 2005) is a collection of many protocols that together achieve network-wide time synchronization in mobile ad hoc networks with high accuracy. To deal with clock skew, TDP resynchronizes all network nodes periodically. Each period starts with the reelection of master nodes, which then repeatedly diffuse timing information that is forwarded by diffused-leader nodes. Since master nodes are reelected in each period, TDP is robust against topology changes. However, both communication complexity and convergence delay are high.

It is an object of the present invention, to provide a method for tick-synchronizing a node of a wireless multi-hop network with at least one other node of said multi-hop network, a computer program product and a system for tick-synchronizing nodes in a multi-hop network as well as a method for time-synchronizing a node of a wireless multi-hop network with at least one other node of said multi-hop network enabling a fast tick synchronization of said network having low complexity.

This object is achieved according to the present invention by a method having the features disclosed in claim 1, claim 14, claim 18 or claim 20, a computer program product having the features disclosed in claim 16 and a system having the features disclosed in claim 17. Preferred embodiments are defined in the dependent claims.

The present invention can in particular be applied to wireless ad hoc networks. A wireless ad hoc network is a computer network in which the nodes communicate via radio links. The network is called ad hoc because it forms dynamically, without infrastructure, from a set of nodes with matching communication facilities.

According to one aspect of the invention, there is provided a method for tick-synchronizing a node of a wireless multi-hop network with at least one other node of said multi-hop network, said network comprising a plurality of nodes being arbitrarily connected, said method comprising the steps of:

receiving a synchronization tick frame from a node, said synchronization tick frame containing a round number $n_{round}$, said round number $n_{round}$ representing or corresponding to the number of hops $n_{hops}$ said synchronization tick frame has performed since its generation;

determining a node reference tick $t_{syncNode}$ corresponding to a master reference tick $t_{syncMaster}$ using said predetermined round number $n_{round}$ and the start time $t_{rxTick}$ of receipt of said synchronization tick frame in said node.

Preferably, said node receiving said synchronization tick frame from a node is within transmission range of said node sending said synchronization tick frame.

Said network may form dynamically, and consist e.g. of a set of small, low power nodes communicating via radio links. For example, nodes within transmission range of each other may be connected via such radio links and communicate with each other.

A reference tick may be a point in time to which all nodes in said network are synchronized. For network-wide medium slotting, e.g., it is not necessary that the clocks of the nodes in the network are synchronized. More in detail, the nodes in particular synchronize to ticks sent by the master node without exchanging clock values of these ticks. The boundaries of transmission slots for transmission of data are then defined relative to these determined ticks.

The determined node reference tick $t_{syncNnode}$ may in particular be a good estimate for said master reference tick $t_{syncMaster}$ and can be used for tick-synchronizing said node.

A round is in particular determined by the transmission of a synchronization tick frame from one node to at least one other node.

Preferably said synchronization tick frame comprises at least one bit and said at least one bit is encoded with a black burst during transmission.

Further preferably, said step of receiving comprises performing a clear channel assessment, which detects whether the transmission medium is busy. In particular, said step of receiving comprises detecting the energy level on the transmission medium.

The value of said at least one bit of said synchronization tick frame may be determined only on the basis of the detected energy level on the transmission medium. In particular, no decoding of frame preambles, headers or contents is necessary.

Preferably, said synchronization tick frame is generated by a master node and said master reference tick $t_{syncMaster}$ is the point in time of at which said master node sent said synchronization tick frame.

Said network may have a maximal diameter of $n_{hopsMax}$ hops and said synchronization tick frame contains at least as many bits to binarily code $n_{hopsMax}$. One hop may be defined as the transmission of a packet or frame from one node to another in the network.

Preferably, $n_{round}$ equals $(n_{hops} - 1)$.

Moreover, the method may further comprise the steps of:

determining whether $n_{round} < n_{hopsMax} - 1$;

if $n_{round} < n_{hopsMax} - 1$,

incrementing said round number $n_{round}$ by 1; and

sending said synchronization tick frame containing said incremented round number preferably to at least one node within transmission range.

In a preferred embodiment, said synchronization tick frame is sent to all nodes within transmission range.

Preferably, said node reference tick $t_{syncNode}$ is determined using the following formula:

$$t_{syncNode} = t_{rxTick} - n_{round} * d_{round}$$

with $d_{round}$ being the duration of one round, one round corresponding to the transmission time of all bits of said synchronization tick frame, in particular from one node to another node within transmission range.

Moreover, the method may further comprise the step of determining whether said node has already received a synchronization tick frame in said synchronization phase.

Preferably, said network is a wireless ad-hoc network. Ad hoc networks may form dynamically, and consist e.g. of a set of small, low power nodes communicating via radio links. Moreover, ad hoc networks are in particular not dependent of a given or predefined infrastructure.

Furthermore, according to the present invention, there is provided a method for time-synchronizing a node of a wireless multi-hop network with at least one other node of said multi-hop network, said method comprising the steps of the method for tick synchronizing a node as described above,
wherein said method further comprises the step of
receiving a clock value referring to a reference point in time.

Preferably, said method further comprises the step of sending said clock value referring to a reference point in time.

According to another aspect of the invention, there is provided a method for tick-synchronizing a node of a wireless multi-hop network with at least one other node of said multi-hop network, said network comprising a plurality of nodes being arbitrarily connected, said method comprising the steps of:

generating a synchronization tick frame, said synchronization tick frame containing a round number, said round number $n_{round}$ representing the number of hops said synchronization tick frame has performed since its generation;
sending said synchronization tick frame preferably to at least one node within transmission range.

Preferably said synchronization tick frame is sent to all nodes within transmission range.

Moreover, said steps may be performed periodically, in particular by setting a timer.

According to the present invention, there is moreover provided a method for time-synchronizing a node of a wireless multi-hop network with at least one other node of said multi-hop network said method comprising the steps of the method for tick synchronizing a node as described above,
wherein said method further comprises the step of
sending said clock value referring to a reference point in time.

According to the invention there is furthermore provided a computer-program product comprising computer readable instructions, which when loaded and run in a computer system and/or computer network system, cause the computer system and/or the computer network system to perform a method as described.

Moreover, according to the present invention, there is provided a system comprising: a first node and a second node,
said first node being connected with said second node, said first node having circuitry for generating a synchronization tick frame, said synchronization tick frame containing a round number, said round number $n_{round}$ representing the number of hops said synchronization tick frame has performed since its generation and circuitry for sending said synchronization tick frame to said second node;
said second node having circuitry for receiving a synchronization tick frame from a node, said synchronization tick frame containing a round number, said round number $n_{round}$ representing the number of hops $n_{hops}$ said synchronization tick frame has performed since its, circuitry for determining a node reference tick $t_{syncNode}$ corresponding to a master reference tick $t_{syncMaster}$ using said predetermined round number and the start time $t_{rxTick}$ of receipt of said synchronization tick frame in said node, and having circuitry for using said determined node reference tick for tick-synchronizing said node.

Said nodes may comprise a transceiver for receiving and sending information packets or frames and a processor for processing information.

Further objects, advantages and features of the present invention will become apparent from the following description of preferred embodiments of the invention with reference to the figures.

Fig. 1        shows an exemplary network according to a preferred embodiment of the present invention;

Figs. 2A-2D   show a schematic overview of a tick synchronization method according to a preferred embodiment of the present invention applied to the network shown in Fig. 1;

Fig. 3        shows a flow diagram of a tick synchronization method according to a preferred embodiment of the present invention;

Fig. 4        shows a flow diagram of a tick synchronization method according to a preferred embodiment of the present invention;

Fig. 5        shows schematic view of the structure and timing of synchronization phases and information transmission phases according to a preferred embodiment of the present invention;

Fig. 6        shows a schematic view of an exemplary synchronization tick frame according to a preferred embodiment of the present invention; and

Fig. 7        shows a schematic view of delays of a message transfer.

In the following, preferred embodiments of the present invention will be described with reference to the figures.

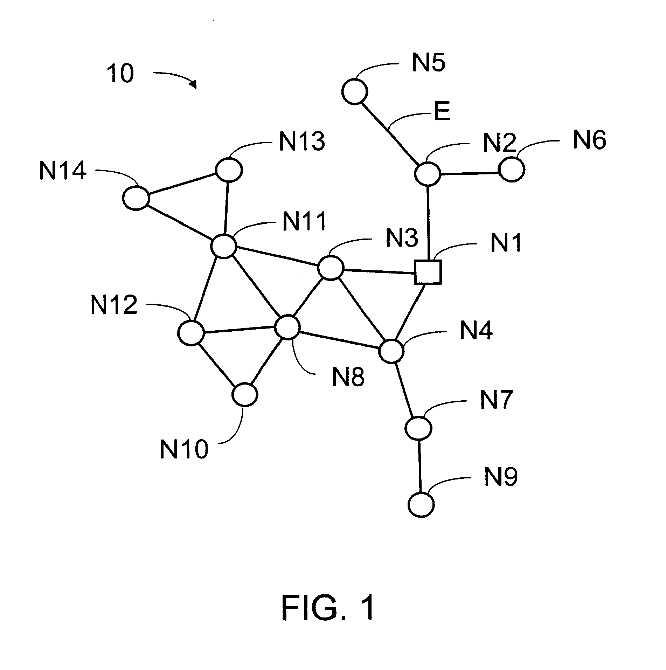

Fig. 1 shows an exemplary network according to a preferred embodiment of the present invention.

Network 10 comprises nodes N1 to N14 which are connected by edges E. In the network 10 shown in Fig. 1, nodes which are within transmission range of each other are connected. The network is a multi-hop network, which means that a packet which is to be transmitted via said network 10 is transmitted via a plurality of intermediate nodes on its way from the starting or sending node to the receiving or destination node. The network shown in Fig. 1 has a maximum hop count of five. This is the maximal number of hops a packet needs to perform during transmission from an arbitrary sending node to an arbitrary receiving node in the network shown in Fig. 1. In the present case, this would e.g. be the transmission of a packet from node N14 to node N6. For each network, a maximum network diameter $n_{hopsMax}$ is defined. This is a number of hops, the maximal hop count shall not exceed. For the example shown in Fig.1, maximum network diameter $n_{hopsMax}$ is defined as 6 hops.

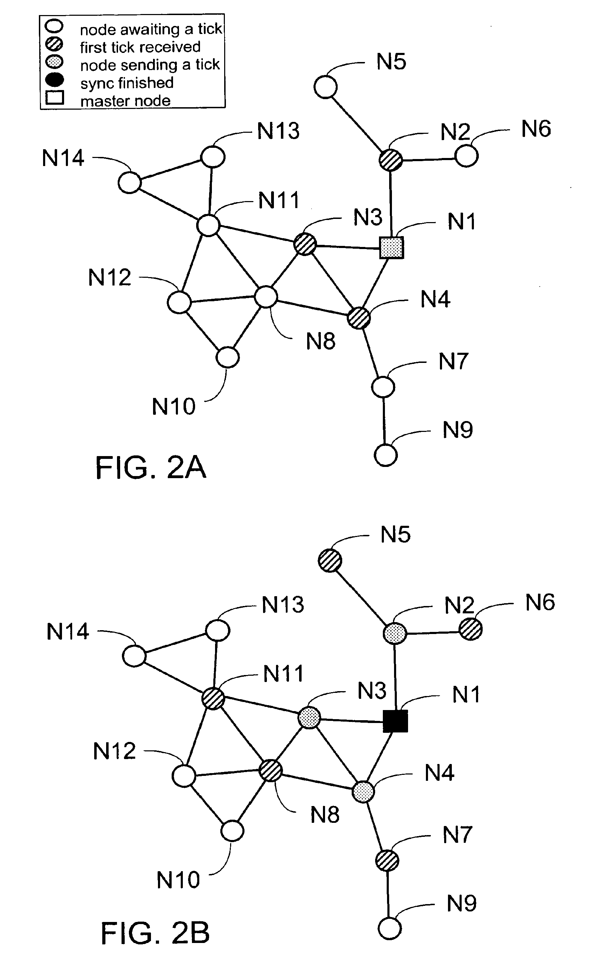

A description of how the network 10 can be tick-synchronized using the method according to a preferred embodiment of the present invention will be described with reference to Figs. 2A to 2D. Figs. 2A to 2D show the network of Fig. 1 at different stages of one synchronization phase of the network. It is to be noted that a synchronization phase is performed periodically in the network.

Tick synchronization is concerned with establishing reference points in time only - also called reference ticks - among the nodes of a network. Different from time synchronization, no clock values are exchanged. Tick synchronization is sufficient, e.g. for network-wide medium slotting, where only common reference points in time are required. For time synchronization, two pieces of information are needed: a reference point in time and a clock value, which are both updated periodically. Based on tick synchronization, time synchronization can be achieved by one exchange of a clock value among the nodes of a network, referring to a reference point in time. Thus, the present invention may also be applicable in cases where time synchronization is required.

At given points in time, a master node starts a synchronization phase. In the example shown in Figs. 2A to 2D, it is assumed that node N1 performs the role of a master node. This node is, therefore, marked as a square. The other nodes are marked with circles. However, it is to be noted that it is in fact irrelevant which of the nodes of the network takes the role of a master node. Which node shall act as master node can be determined with the use of known master node finding algorithms, which will be not described in detail herein.

Moreover, in Figs. 2A to 2D, a node colored black is a node for which the tick synchronization in the current synchronization phase is finished. A node colored white is a node which is still awaiting a synchronization tick frame, i.e. a node which has node yet received any synchronization information in the current synchronization phase. A node marked hatched is a node which has received a synchronization tick frame in the current round. Only nodes which received for the first time a synchronization tick frame in the current round are marked hatched. Nodes which have already in a previous round received a synchronization tick frame are already synchronized and, therefore, marked black. Nodes marked dotted are nodes sending a synchronization tick frame in the current round. A legend indicating the marking of the nodes is given on the top left of Fig. 2A.

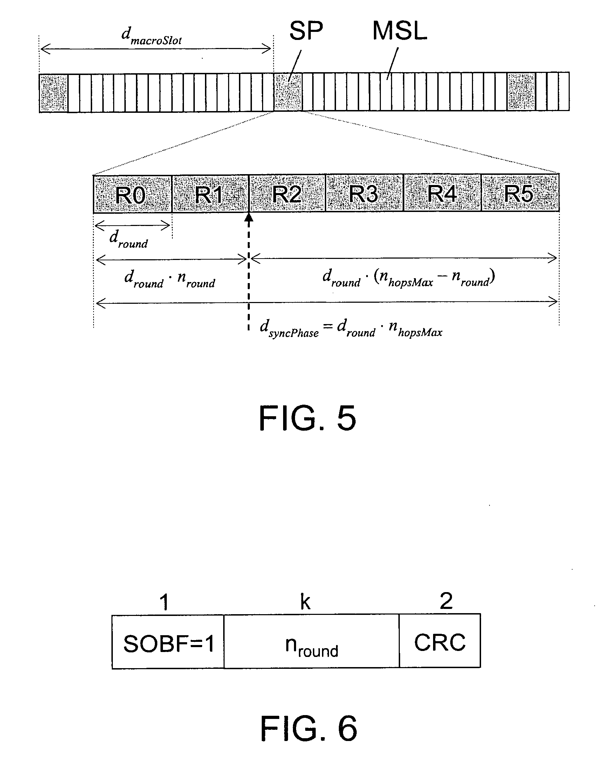

Node N1 acting as master node broadcasts a synchronization tick frame carrying a round number (Fig. 2A). In the described embodiment, the round number $n_{round}$ is zero for the tick frame generated by master node N1. Master node N1 sends the tick frame to all nodes within transmission range. In the shown network, these are nodes N2, N3 and N4. The synchronization tick frame comprises a plurality of bits and details thereof will be described later with reference to Fig. 6.

Nodes N2, N3 and N4, upon receiving the tick frame sent by node N1, derive the round number $n_{round}$ contained in the tick frame and detect the local node time $t_{rxTick}$ at which the tick frame was received. In particular, the local time at which the first bit of the tick frame was received is recorded. Since the round number $n_{round}$ is zero in the present round, the receiving nodes conclude that this tick frame has been sent by the master node. From the tick frame reception time $t_{rxTick}$ in the respective node and the round number, the receiving node can estimate the time at which the tick frame was sent by the master node. Details of this calculation will be given later.

Nodes N2, N3 and N4 verify if there are more nodes to be tick-synchronized and, in the positive, increment the round number by one, thus $n_{round} = 1$, and forward the tick frame now carrying the incremented round number to all nodes in transmission range (Fig. 2B). For node N2, the tick frame will be transmitted to nodes N1, N5 and N6. In nodes N5 and N6, a similar processing takes place as done in the previous round e.g. in node N2. This means that the round number is extracted from the received tick frame and together with the tick frame reception time in this node. With this information, the time, when the original tick frame was sent by master node N1 can be determined.

In node N1, a different processing takes place. As node N1 is already synchronized, the received tick frame is discarded.

Similarly, node N3 sends a tick frame containing an incremented round number to nodes N1, N4, N8 and N11, and node N4 sends a respective tick frame to nodes N1, N3, N7 and N8. As nodes N1, N3 and N4 are already synchronized, these nodes discard the received tick frames. Nodes N7 and N8 have not yet been synchronized and therefore process the received tick frame.

In this respect it is to be mentioned, that due to the structure of the network, N8 receives a tick frame containing the same information from two nodes, i.e. N3 and N4. Thus, two tick frames collide. However, according to a preferred embodiment of the present invention, the tick frames are protected against such a collision and therefore are not corrupted when sent simultaneously or almost simultaneously. Details of the collision protection will be discussed later.

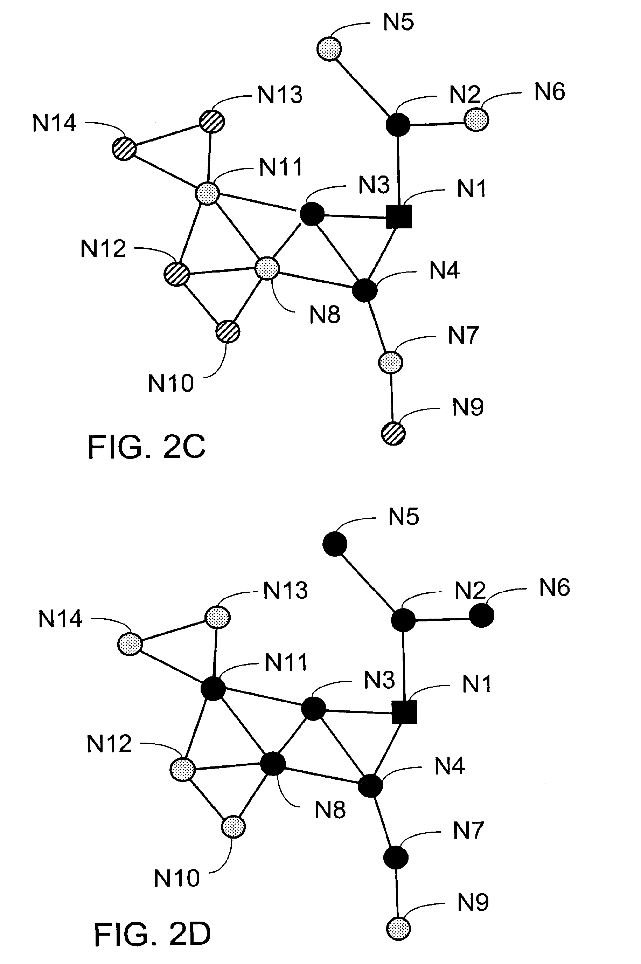

Nodes N7, N8 and N11 now perform the processing of deriving the synchronization information from the received tick frame and again increment the round number, thus $n_{round} = 2$. Afterwards these nodes send a respective tick frame to all nodes within transmission range (Fig. 2C). By such proceeding, nodes N9, N10, N12, N13 and N14 are synchronized.

Thereafter, nodes N9, N10, N12, N13 and N14 send the tick frame with incremented round number, $n_{round} = 3$ (Fig. 2D). However, as there are no more nodes which have not yet been synchronized, all tick frames sent by these nodes are discarded by the receiving nodes.

As can be seen from the above description, a round is the part of the synchronization phase when a synchronization tick frame is sent from one node to another.

To sum up, based on round number $n_{round}$ and duration of rounds $d_{round}$, the start time of the synchronization phase, i.e. the time when the master node sent the first bit of the synchronization tick frame, as a reference tick or master reference tick for all nodes of the network can be estimated. It is to be noted that the synchronization phase always terminates after $n_{hopsMax}$ rounds. If the network diameter is smaller than $n_{hopsMax}$ or if the master node is not located at the network border, no tick frames are sent in the final round(s) anymore. In the scenario in Figs. 2A to 2D, tick frames are sent in rounds 0 through 3, but not in rounds 4 and 5.

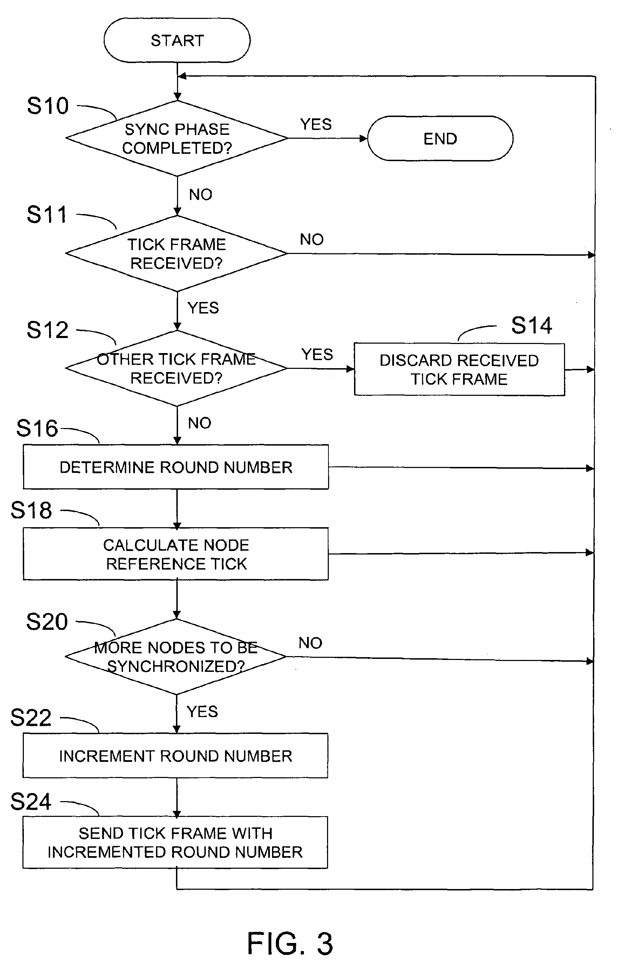

The details of the processing in a node not acting as a master node during the synchronization procedure will be given with reference to Fig. 3. Fig. 3 shows a flow chart of the processing in one node of the network not acting as master node during the synchronization phase.

The node is put into synchronization mode by e.g. setting a timer and the processing starts. In step S10, a query is performed, whether the synchronization phase is completed. The end of the synchronization phase can e.g. be determined by setting a timer which expires after a predetermined time $t_{endSyncPhase}$. If the synchronization phase is completed (YES in step S10), the synchronization process ends, and the operation mode of the node changes to normal transmission mode for the transmission of data.

If the synchronization phase is not completed (NO in step S10), the node queries whether a tick frame was received (step S11). If no tick frame was received (NO in step S11), the query is performed again.

If a tick frame was received (YES in step S11), a query is performed whether the respective node already received another tick frame during this synchronization phase (step S12). If the node already received another tick frame during this synchronization phase (YES in step S12), the respective node already received the necessary synchronization information and the newly received tick frame is discarded (step S14). The processing then returns to step S10.

If, however, the node has not yet received a tick frame (NO in step S12), the round number contained in the received tick frame is determined (step S16). Afterwards, the node reference tick is calculated in step S18 by using the determined round number and the time when the tick frame was received in the respective node.

Afterwards, a determination is performed whether there are still more nodes to be synchronized in the network (step S20). This is in particular done by comparing the current round number, which is an indication of the number of hops the tick frame has performed since is was sent from the master node, with the maximum network diameter of the network. In particular, it is determined whether the round number $n_{round} < n_{hopsMax} - 1$.

If there are no more nodes to be tick-synchronized (NO in step S20), processing returns to step S10. If, however, there are more nodes to be tick-synchronized (YES in step S20), the round number is incremented (step S22) and the node now itself sends the tick frame with the incremented round number to all nodes within transmission range (step S24), thus starting a new round. Afterwards, processing returns to step S10.

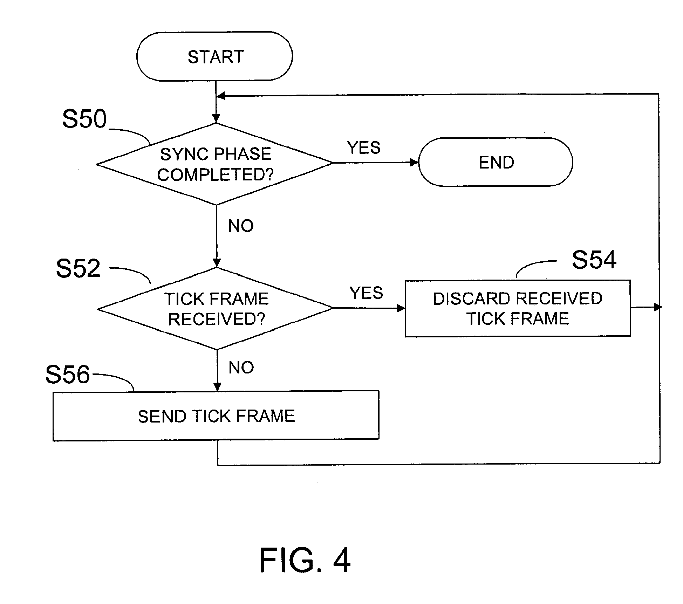

The details of the processing in a node acting as a master node during the synchronization procedure will be given with reference to Fig. 4. Fig. 4 shows a flow chart of the processing in one node of the network acting as master node during the synchronization phase.

The node is put into synchronization mode by e.g. setting a timer and the processing starts. In step S50, a query is performed, whether the synchronization phase is completed. The end of the synchronization phase can e.g. be determined by setting a timer which expires after a predetermined time $t_{endSyncPhase}$. If the synchronization phase is completed (YES in step S50), the synchronization process ends, and the operation mode of the node changes to normal transmission mode for the transmission of data.

If the synchronization phase is not completed (NO in step S50), the node queries whether a tick frame was received (step S52). This can occur during the synchronization process as described above. If a tick frame was received (YES in step S52), the received tick frame is discarded (step S54), as the respective node is the master node and is already synchronized.. The processing then returns to step S50.

If, however, the no tick frame is received (NO in step S52), the master node sends a synchronization tick frame to all nodes within transmission range (step S56). The time $t_{syncMaster}$ at which the tick frame is sent represents the tick to which all nodes in the network will be synchronized. This tick frame preferably carries round number zero. Afterwards, the processing returns to step S50.

As can be seen from the description given above with respect to Figs. 3 and 4, for the synchronization of the network only the round number is transmitted with the synchronization tick frame. In particular, no specific time information is transmitted to the nodes. From the information received in the synchronization tick frame, i.e. the round number and the time of receipt in the node, the node can determine a good estimate of a reference point in time. Said reference point in time corresponding to $t_{syncMaster}$.

Below is listed an example of an algorithm using methods according to a preferred embodiment of the present invention.

**Data structure of master and non-master nodes**

| (1) | **const** | $n_{hopsMax}$: integer; | /* maximum network diameter |
|---|---|---|---|
| (2) | | $d_{macroSlot}$: duration; | /* duration of a macro slot |
| (3) | | $d_{round}$: duration; | /* duration of a round |
| (4) | **var** | $n_{round}$: integer; | /* round of first tick reception |
| (5) | | $t_{txTick}$: time; | /* last tick transmission time |
| (6) | | $t_{rxTick}$: time; | /* last tick reception time |
| (7) | | $t_{endSyncPhase}$: time; | /* end of the current sync phase |
| (8) | **clock** | $t_{local}$; | /* local time |
| (9) | **timer** | $timer_{txTick}$; | /* next tick frame transmission |
| (10) | | $timer_{macroSlot}$; | /* begin of the next macro slot |

**Master node synchronization algorithm**

```
(11) initialize  n_hopsMax, d_macroSlot, d_round;        /* static network parameters
(12)             timer_macroSlot;                        /* used by master nodes
(13) when timer_macroSlot then {
(14)         t_txTick := t_local;
(15)         broadcast tickFrame(0);                     /* start round number 0
(16)         t_endSyncPhase := t_txTick + d_round * n_hopsMax;
(17)     set timer_macroSlot := t_txTick + d_macroSlot;
(18) }
(19) when receive tickFrame (n) then {                   /* network interrupt
(20) }                                                   /* discard incoming tick frames
```

**Non-master node synchronization algorithm**

(21) **initialize** $n_{hopsMax}$, $d_{macroSlot}$, $d_{round}$; /* static network parameters

(22) $\phantom{}$ $timer_{macroSlot}$; /* used during synchronization

(23) **when** $timer_{macroSlot}$ **then**

(24) $\phantom{}$ $n_{round} := n_{hopsMax}$; /* enable tick frame processing

(25) **when receive** tickFrame (n) **then** {

(26) $\phantom{}$ **if** $n < n_{round}$ **then** { /* accept first tick frame

(27) $\phantom{}$ $t_{rxTick} := t_{local}$; /* record tick frame reception time

(28) $\phantom{}$ $n_{round} := n$; /* disable tick frame processing

(29) $\phantom{}$ **set** $timer_{macroSlot} := t_{rxTick} - d_{round} * n_{round} + d_{macroSlot}$;

(30) $\phantom{}$ $t_{endSyncPhase} := t_{rxTick} + d_{round} * (n_{hopsMax} - n_{round})$;

(31) $\phantom{}$ **if** $n_{round} < (n_{hopsMax} - 1)$ **then** /* more rounds?

(32) $\phantom{}$ **set** $timer_{txTick} := t_{rxTick} + d_{round}$;

(33) $\phantom{}$ }

(34) }

(35) **when** $timer_{txTick}$ **then**

(36) $\phantom{}$ **broadcast** tickFrame ($n_{round} + 1$);

In lines (1)-(10), the data structure of master and non-master nodes is shown. Constants and variables denoting numbers, durations, and times have names n, d, and t followed by a subscript, respectively. The subsequent comment provides additional explanations. Furthermore, there is introduced a local clock, and two timers that can be set to trigger interrupts.

Lines (11)-(20) list the part of the algorithm that is executed by the master node. In lines (11)-(12), the required initializations are shown. While the parameters in line (11) are constants and determined offline during network configuration, $timer_{macroSlot}$ is set dynamically when the node becomes master node. The when-clauses shown in lines (13) and (19) are used to define interrupt routines, i.e. routines that are executed when the specified interrupt event occurs. In line (13), this is a timer event; the interrupt in line (19) is triggered by the network adapter due to a tick frame reception. At the beginning of every macro slot (timer event in line (13)), the master has to initiate a synchronization phase by broadcasting a tick frame with round number zero (line (15)). The end of the sync phase is determined in line (16), and the timer for the beginning of the next macro slot set in line (17).

Lines (21)-(36) list the part of the algorithm that is executed by non-master nodes. The required initializations are as in the master node algorithm. Tick frame processing is enabled at the beginning of each macro slot (lines (23)-(24)). When a tick frame is received (interrupt in line 25), the round number is evaluated. If this is the first tick frame of the current sync phase, the frame is processed (lines (27)-(32)), otherwise, it is discarded. By recording the round number, processing of subsequent tick frames (which will have higher numbers) is disabled (line (28)). Next, the timer identifying the start of the next macro slot is set (line (29)). An example of how the timer value is calculated can be seen in Fig. 5, with $n_{round} = 2$. The end of the sync phase is determined in line (30). Finally, it is checked whether there is a further round (line (31)). If this is the case, the timer $timer_{txTick}$ is set to the beginning of the next round. When this timer expires (line 35), a tick frame is sent (line (36)).

Fig. 5 shows schematic view of the structure and timing of synchronization phases and information transmission phases according to a preferred embodiment of the present invention.

Based on network-wide tick synchronization, the transmission medium is divided into global macro slots of fixed length $d_{macroSlot}$. Each macro slot is subdivided into a leading synchronization phase SP of fixed length, and a sequence of micro slots MSL that can be used for the transmission of regular data frames. The length of macro slots is bounded by the required tick precision $d_{offsetMax}$ and the maximal clock skew $r_{clockSkewMax}$.

Fig. 5 also shows the structure and timing of the synchronization phase. A synchronization phase is subdivided into rounds R0 to R5 of fixed duration $d_{round}$, where the number of rounds is $n_{hopsMax} - 1$. In a preferred embodiment, rounds are incrementally numbered, starting with zero. The length of the synchronization phase

$$d_{syncPhase} \text{ is } d_{round} * n_{hopsMax}.$$

The format of synchronization tick frames will be described in detail with reference to Fig. 6. Fig. 6 shows a schematic view of an exemplary synchronization tick frame according to a preferred embodiment of the present invention.

As shown in Fig. 6, preferably, tick frames start with a dominant bit, i.e. SOBF = 1. Then, the number of the current round $n_{round}$ is encoded. $n_{round}$ is protected by a CRC (cyclic redundancy check) checksum. In addition, every receiver expects a particular tick frame in a relatively small time window, which provides for further redundancy to detect bit errors.

The numbers above the box in Fig. 6 indicate the number of bits used for each field in the synchronization tick frame.

For SOBF, one bit is reserved. The number k of bits needed to encode the current round depends on the upper bound for the maximal network diameter $n_{hopsMax}$ and is calculated as follows:

$$k = \lceil \log_2 n_{hopsMax} \rceil$$

For the CRC checksum two bit are reserved. Therefore, in the discussed embodiment, a synchronization tick frame has a total length of

$$length_{tickFrame} = k + 3.$$

It is desirable that tick frames be as short as possible, because bit times are significantly longer than usual. To send one bit, the duration of a black burst is needed, which is preferably a physical frame or a frame which is transmitted over the physical layer, in particular, consisting of preamble, start-of-frame, and MAC frame (media access control frame), even if the contents is not needed. To keep the overhead as small as possible, we use the smallest MAC frame, consisting of the length field with value zero, i.e. one single byte. However, it is to be noted that the structure of the physical frame may be different depending on the type of the base transmission technology used.

As stated earlier, according to a preferred embodiment of the present invention, a tick frame is a specialized synchronization frame that is protected against collisions and carries synchronization data. To ensure collision protection, tick frames, and in particular the single bits of a tick frame, are preferably encoded using black bursts.

Black burst frames are transmitted without prior clear channel assessment (CCA), i.e. without carrier sensing. Different from regular data frames, their contents is irrelevant, which protects them against collisions. However, the length of a black burst can be determined and used for encoding purposes. To detect black bursts, the transceiver in a node is configured to perform clear channel assessment preferably based only on the energy level on the medium, without having to decode frame preambles. Alternatively, other methods of clear channel assessment may be envisaged. This way, it is possible to receive black bursts correctly even if multiple transmissions collide, destroying preamble, header, and payload.

While black bursts are insensitive to interference, they are affected by length changes, which may occur when black burst transmissions overlap. However, this problem may be avoided if black bursts are sent at predefined points in time, assuming that all nodes are tick synchronized with a maximal offset $d_{offsetMax}$.

According to a preferred embodiment, black bursts of equal length are used to encode tick frames including synchronization data. Here, "1" is encoded as a black burst transmission, "0" is encoded as no black burst transmission.

The nodes receiving a tick frame in round i become the nodes sending a tick frame in round i+1, which is synchronized with respect to the local time of the previous tick frame reception: $t_{txTick} = t_{rxTick} + d_{round}$. In particular, the tick can be forwarded after the respective node has received the entire tick frame and after the tick frame has been processed during the time $d_{tickProcessing}$ in the node. Here, $d_{round}$ denotes the round duration, a constant configuration parameter that should be greater than tick frame creation delay and send delay together.

One node can calculate a node reference tick $t_{syncNode}$, which is an estimate of the a master reference tick $t_{syncMaster}$ which indicates the time when the master node sent the synchronization tick frame using the following formula:

$$t_{syncNode} = t_{rxTick} - n_{round} * d_{round}$$

with

$$d_{round} = d_{transmissionTickFrame} + d_{tickProcessing}$$

wherein

$$d_{transmissionTickFrame} = d_{blackBurst} * (k+3)$$

$d_{blackBurst}$ is the time needed for transmitting one black burst and the time necessary for a subsequent pause.

According to the above described tick synchronization method, it is not necessary that the clocks of the nodes in the network are synchronized. More in detail, the nodes in particular synchronize to ticks sent by the master node without exchanging clock values of these ticks. In fact, as described above, only the respective round number, however, no clock value is transmitted with the tick frame. The boundaries of transmission slots for transmission of data are then defined relative to these determined ticks.

In addition, clock values referring to reference ticks may be exchanged, thereby achieving time synchronization. In particular, it may be sufficient to exchange one clock value referring to a reference point in time among the nodes of the network. Such a reference point in time may be the time when the master reference tick was sent by the master node.

Due to a variable signal processing delay and a variable delay of recognizing the start of the tick frame reception in a node, the estimated value $t_{syncNode}$ calculated with the use of the above formula, contains an error $d_{tickOffset}$ for which an upper bound can be determined. Therefore, the synchronization tick can be estimated in each node with a known accuracy.

For multi-hop medium slotting, tick accuracy with a deterministic time bound is desired. There are several sources of message transfer delay, which may contribute to inaccuracy:

- $d_{creation}$ (creation delay) is the duration of constructing a message and forwarding it to the network interface. Delay jitter may be introduced by the operating system due to context switches and interrupt processing.
- $d_{access}$ (access delay) is the duration until the medium can be accessed. Delay jitter may be introduced due to waiting delay in the local message queue and due to medium arbitration in case of contention.
- $d_{tx}$ (send delay) is the duration of message transmission, which depends on transmission rate and message length.
- $d_{prop}$ (propagation delay) is the duration a signal travels from the source node to the destination node. If these nodes are within range, this delay depends on signal propagation speed and node distance only.
- $d_{rx}$ (receive delay) is the duration of receiving a message, depending on transmission rate and message length.
- $d_{rxProc}$ (receive processing delay) is the duration of processing a received message, for instance, by creating and processing a hardware interrupt.

All delays are composed of a fixed minimal delay and a variable delay jitter (possibly zero). The fixed minimal delay can be determined in advance, e.g. by counting instruction cycles or by dividing frame length by transmission rate. If considered properly, it does not affect tick accuracy. However, delay jitter contributes to inaccuracy and must be kept as small as possible.

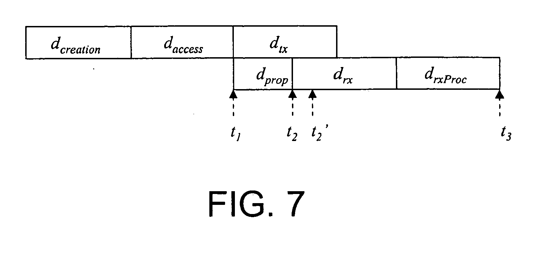

A schematic view of delays of a message transfer is shown in Fig. 7. In particular, Fig. 7 shows how the delays of a message transfer add up. It should be pointed out that due to the fact that signal propagation starts at the beginning of message transmission, there is some overlap. If $d_{prop} \le d_{tx}$, there is also overlap of transmission and reception. Since transmission rate equals reception rate, $d_{tx} = d_{rx}$.

The above considerations can be applied to the exchange of tick frames. Tick frame creation can be performed well ahead of the next scheduled transmission, which occurs at a predefined point in time; therefore, $d_{creation}$ has no effect on tick accuracy. As stated above, tick frames preferably comprise of a sequence of black bursts. Since black bursts are transmitted without prior carrier sensing, $d_{access}$ is the (constant) duration of the blind period caused by switching the transceiver to send mode. As tick frame length and transmission rate are known, $d_{tx}$ and $d_{rx}$ can be determined by sender and receiver, respectively ($d_{tx} = d_{rx}$).

A source of delay jitter is $d_{prop}$, which depends on signal propagation speed and node distance. In ad hoc networks, this distance is typically well below 100m. With electromagnetic signals propagating through air at the speed of light, the maximal value of $d_{prop}$ is $0.3\mu s$, which is negligible. Another source of delay jitter is $d_{rxProc}$, caused by creating and processing a hardware interrupt. In summary, tick frame transmission can be started on schedule at $t_1$, tick frame arrival begins at $t_2$, and the tick frame is completely received and processed at $t_3$ (see Fig. 7).

The tick synchronization method described above not only receives the entire tick frame, but also records the start time of frame arrival. The hardware mechanism exploited for this purpose is preferably clear channel assessment (CCA), creating a hardware interrupt as soon as the channel is detected busy. This means that the start time of tick frame arrival is recorded at time $t_2'$ (see Fig. 7). The time needed for this detection, called CCA delay, which mainly consists of delay jitter with upper bound and may be referred to as $j_{CCAmax}$, $j_{CCAmax}$ being the $t_2' - t_2$. Since $d_{prop}$ is negligible and tick frames can be sent on schedule at predefined points in time, $j_{CCAmax}$ is the only remaining source of inaccuracy for tick synchronization with BBS. Since in the worst case, this delay jitter accumulates with each hop, the bound for tick offset right after (re-)synchronization is given as $d_{offsetBase} = n_{hopsMax} * j_{CCAmax}$.

Alternatively to creating a hardware interrupt as soon as the channel is detected busy, it may be provided that it is periodically determined whether the channel is busy or not.

Due to clock skew, the tick accuracy achieved after (re-)synchronization degrades over time. The worst case bound $d_{offsetMax}$ depends on the resynchronization period, which in the present case is equal to the macro slot length $d_{macroSlot}$. The clock skew (also referred to as clock drift) denotes the difference between the frequencies of a clock $C_A$ relative to another clock $C_B$. If $C_B$ is a perfect clock at real time t, the frequency of this clock is 1. Assuming a maximal clock skew of $r_{clockSkewMax}$, $d_{offsetMax}$ computes as follows:

$$d_{offsetMax} = n_{hopsMax} * j_{CCAmax} + 2 * r_{clockSkewMax} * d_{macroSlot}$$

In turn, given a worst case bound $d_{offsetMax}$, the maximal macro slot duration can be calculated. On average, tick accuracy will be far better than this bound, however, this can not be exploited for multi-hop medium slotting.

Convergence delay is equal to the duration of a synchronization phase, consisting of $n_{hopsMax}$ rounds. As discussed above, round duration depends on send delay of a black burst, tick frame duration, and tick frame processing delay:

$$d_{syncPhase} = d_{round} * n_{hopsMax}, \text{ where}$$

$$d_{round} = d_{blackBurst} * (k + 3) + d_{tickProcessing}$$

The described method has low complexity in terms of communication, computation, and storage. Communication complexity depends linearly on maximum network diameter - to establish a reference tick, $n_{hopsMax}$ tick frames are exchanged.

Above, periodical resynchronization triggered by a master node in a stabilized network was described. In the following, examples will be described in brief how stabilization may be reached when the network is powered up, and how it is maintained despite topology changes.

New nodes:

When a node is switched on which is to be added to the network, it will listen to the transmission medium for the duration of at least 6 macro slots. If 3 subsequent tick frames are received, the node has detected a synchronized network. In this case, it is tick synchronized and starts sending synchronized tick frames, thereby joining the network. If no tick frames are detected, the node becomes a master node and starts sending tick frames, thereby forming a new network.

Master node failure:

If a master node is switched off or moves outside range of other network nodes, no tick frame sequence will be triggered at the beginning of the next synchronization phase. This will be detected by all non-master nodes in the course of this phase. In this case, these nodes switch to a master-less mode, which is a fully distributed tick synchronization algorithm with reduced tick accuracy $d_{offsetBase} = n_{hopsMax} * (j_{CCAmax} + d_{blindPeriod})$, where $d_{blindPeriod}$ is the time a transceiver needs to switch from receive mode to send mode. In master-less mode, each node determines a random number $n_{random}$ out of a sufficiently large integer interval and starts a tick frame sequence $d_{syncPhase} * n_{random}$ after the beginning of the last macro slot. The first node starting the tick frame sequence becomes the master node. If no other node has determined the same random number, synchronization is established after one synchronization phase, otherwise the procedure is repeated.

Position changes:

If a node changes position, thereby changing the topology of the network, two situations may arise. First, the set of nodes forming the network remains the same, only the set of links is modified. This has no effect on tick synchronization, since the synchronization method assumes no particular hierarchy, and because tick frames are protected against collisions. Second, the network is partitioned. In this case, the network partition containing the master node remains tick synchronized. In the other part of the network, no tick frame sequence will be triggered at the beginning of the next synchronization phase. This will be detected by all remaining nodes in the course of this phase. The situation is equivalent to master node failure (see above) and treated likewise.

Network merging:

If networks meet, they have to merge into one tick synchronized network. Among the nodes of different networks, however, there is a lack of tick synchronization. This is detected by receiving unexpected tick frames of the other network, or by collisions of regular frames in reserved micro slots. Note that black bursts are shorter than regular frames; they can be detected by the CCA mechanism only. Each node detecting another network sends a jamming frame (a reserved sequence of black bursts) in a predefined micro slot, which will be repeated by all receiving nodes (similar to tick frames). After transmission of a jamming frame, non-master nodes stop sending. The previous master nodes determine a random number $n_{random}$ each, and start acting as master node $d_{syncPhase} * n_{random}$ after the beginning of the last macro slot. The first node starting the tick frame sequence becomes the new master node; network-wide tick synchronization is established after one synchronization phase.

**List of Reference Numerals**

10       network

N1-N14   nodes

E        edges

**Claims**

1. A method for tick-synchronizing a node (N1-N14) of a wireless multi-hop network with at least one other node (N1-N14) of said multi-hop network, said network comprising a plurality of nodes (N1-N14) being arbitrarily connected, said method comprising the steps of:

receiving a synchronization tick frame from a node (N1-N14), said synchronization tick frame containing a round number $n_{round}$, said round number $n_{round}$ representing the number of hops $n_{hops}$ said synchronization tick frame has performed since its generation;
determining a node reference tick $t_{syncNode}$ corresponding to a master reference tick $t_{syncMaster}$ using said predetermined round number $n_{round}$ and the start time $t_{rxTick}$ of receipt of said synchronization tick frame in said node (N1-N14).

2. The method according to claim 1, wherein said synchronization tick frame comprises at least one bit and said at least one bit is encoded with a black burst during transmission.

3. The method according to claim 2, wherein said step of receiving comprises performing a clear channel assessment by which it is determined whether the transmission medium is busy.

4. The method according to claim 2 or 3, wherein said step of receiving comprises detecting the energy level on the transmission medium.

5. The method according to claim 4, wherein the value of said at least one bit of said synchronization tick frame is determined only on the basis of the detected energy level on the transmission medium.

6. The method according to one of the preceding claims, wherein said synchronization tick frame is generated by a master node (N1) and said master reference tick $t_{syncMaster}$ is the time of at which in said master node (N1) sent said synchronization tick frame.

7. The method according to one of the preceding claims, wherein said network has maximal diameter of $n_{nopsMax}$ hops and said synchronization tick frame contains at least as many bits to binarily code $n_{hopsMax}$.

8. The method according to one of the preceding claims, wherein $n_{round} = (n_{hops} - 1)$.

9. The method according to claim 7 and 8, further comprising the steps of: determining whether $n_{round} < n_{hopsMax} - 1$;

if $n_{round} < n_{hopsMax} - 1$,
incrementing said round number $n_{round}$ by 1; and
sending said synchronization tick frame containing said incremented round number.

10. The method according to claim 9, wherein said synchronization tick frame is sent to all nodes (N1-N14) within transmission range.

11. The method according to claim 8, wherein said node reference tick $t_{syncNode}$ is determined using the following formula:

$$t_{syncNode} = t_{rxTick} - n_{round} * d_{round}$$

with $d_{round}$ being the duration of one round corresponding to the transmission time of all bits of said synchronization tick frame.

12. The method according to one of the preceding claims, further comprising the step of:

determining whether said node (N1-N14) has already received a synchronization tick frame.

13. The method according to one of the preceding claims, wherein said network is a wireless ad-hoc network.

14. A method for tick-synchronizing a node (N1-N14) of a wireless multi-hop network with at least one other node (N1-N14) of said multi-hop network, said network comprising a plurality of nodes (N1-N14) being arbitrarily connected, said method comprising the steps of:

generating a synchronization tick frame, said synchronization tick frame containing a round number, said round number $n_{round}$ representing the number of hops said synchronization tick frame has performed since its generation;
sending said synchronization tick frame.

15. The method according to claim 14, wherein said steps are performed periodically.

16. Computer program product comprising computer readable instructions, which when loaded and run in a computer and/or computer network system, causes the computer system and/or the computer network system to perform operations according to a method of anyone of the preceding claims.

17. A system comprising:

a first node (N1-N14) and a second node (N1-N14),
said first node (N1-N14) being connected with said second node (N1-N14), said first node (N1-N14) having circuitry for generating a synchronization tick frame, said synchronization tick frame containing a round number, said round number $n_{round}$ representing the number of hops said synchronization tick frame has performed since its generation and circuitry for sending said synchronization tick frame to said second node (N1-N14);
said second node (N1-N14) having circuitry for receiving a synchronization tick frame from a node (N1-N14), said synchronization tick frame containing a round number, said round number $n_{round}$ representing the number of hops $n_{hops}$ said synchronization tick frame has performed since its generation, circuitry for determining a node reference tick $t_{syncNode}$ corresponding to a master reference tick $t_{syncMaster}$ using said predetermined round number and the start time $t_{rxTick}$ of receipt of said synchronization tick frame in said node (N1-N14), and having circuitry for using said determined node reference tick for tick-synchronizing said node (N1-N14).

18. A method for time-synchronizing a node (N1-N14) of a wireless multi-hop network with at least one other node (N1-N14) of said multi-hop network, said method comprising the steps of the method for tick synchronizing a node according to one of claims 1 to 13,
wherein said method further comprises the step of
receiving a clock value referring to a reference point in time.

19. The method according to claim 18, further comprising the step of sending said clock value referring to a reference point in time.

20. A method for time-synchronizing a node (N1-N14) of a wireless multi-hop network with at least one other node (N1-N14) of said multi-hop network said method comprising the steps of the method for tick synchronizing a node according to one of claims 14 to 16,
wherein said method further comprises the step of
sending said clock value referring to a reference point in time.

FIG. 1

| | |
|---|---|
| ○ | node awaiting a tick |
| ⊘ | first tick received |
| ◉ | node sending a tick |
| ● | sync finished |
| ☐ | master node |

**FIG. 2A**

**FIG. 2B**

FIG. 2C

FIG. 2D

START

S10 — SYNC PHASE COMPLETED? —YES→ END

NO

S11 — TICK FRAME RECEIVED? —NO→

YES

S12 — OTHER TICK FRAME RECEIVED? —YES→ S14 DISCARD RECEIVED TICK FRAME

NO

S16 — DETERMINE ROUND NUMBER

S18 — CALCULATE NODE REFERENCE TICK

S20 — MORE NODES TO BE SYNCHRONIZED? —NO→

YES

S22 — INCREMENT ROUND NUMBER

S24 — SEND TICK FRAME WITH INCREMENTED ROUND NUMBER

FIG. 3

FIG. 4

FIG. 5

| 1 | k | 2 |
|---|---|---|
| SOBF=1 | $n_{round}$ | CRC |

FIG. 6

FIG. 7

**European Patent Office**

# EUROPEAN SEARCH REPORT

Application Number

EP 07 01 7409

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AAKVAAG N ET AL: "Timing and Power Issues in Wireless Sensor Networks — An Industrial Test Case" PARALLEL PROCESSING, 2005. ICPP 2005 WORKSHOPS. INTERNATIONAL CONFERENCE WORKSHOPS ON OSLO, NORWAY 14-17 JUNE 2005, PISCATAWAY, NJ, USA,IEEE, 14 June 2005 (2005-06-14), pages 419-426, XP010820995 ISBN: 0-7695-2381-1 * paragraph [04.2]; figure 6 * | 14 | INV. H04B7/26 H04J3/06 |
| A | | 1,17,18 | |
| X | WO 2006/067271 A (KOHVAKKA MIKKO [FI]; HAEMAELAEINEN TIMO D [FI]; HAENNIKAEINEN MARKO [F) 29 June 2006 (2006-06-29) * page 23, line 12 - page 25, line 33 * | 14 | |
| A | | 1,17,18 | |
| A | US 2002/019951 A1 (KUBO MASAHITO [JP] ET AL) 14 February 2002 (2002-02-14) * paragraph [0093] - paragraph [0113]; figures 5,6 * | 1-20 | TECHNICAL FIELDS SEARCHED (IPC) H04J H04B |
| A | MAVRONICOLAS M ED - INSTITUTE OF ELECTRICAL AND ELECTRONICS ENGINEERS: "An upper and a lower bound for tick synchronization" 2 December 1992 (1992-12-02), PROCEEDINGS OF THE REAL TIME SYSTEMS SYMPOSIUM. PHOENIX, DEC. 2 - 4, 1992, LOS ALAMITOS, IEEE COMP. SOC. PRESS, US, PAGE(S) 246-255 , XP010031277 ISBN: 0-8186-3195-3 * abstract * * paragraph [0001] - paragraph [02.2] * | 1-20 | |

-/--

The present search report has been drawn up for all claims

| Place of search | Date of completion of the search | Examiner |
|---|---|---|
| Munich | 26 November 2007 | Staeger, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 01 7409

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | J. ELSON, L. GIROD, D. ESTRIN: "Reference Broadcast synchronization (RBS): Fine grained network time synchronization using reference broadcast" PROCEEDINGS OF THE FIFTH SYMPOSIUM ON OPERATING DESIGN AND IMPLEMENTATION (OSDI), December 2002 (2002-12), pages 1-17, XP002459887 Boston; MA, USA * the whole document * | 1-20 | |
| D,A | S. GANERIWAL, R. KUMAR, M. B. SRIVASTAVA: "Timing-sync Protocol for sensor networks" PROCEEDINGS OF SENSYS, 3 November 2003 (2003-11-03), XP002459888 Los Angeles, Ca, USA * the whole document * | 1-20 | |

TECHNICAL FIELDS
SEARCHED      (IPC)

The present search report has been drawn up for all claims

| Place of search | Date of completion of the search | Examiner |
|---|---|---|
| Munich | 26 November 2007 | Staeger, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 01 7409

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2007

| Patent document cited in search report | Publication date | Patent family member(s) | | Publication date |
|---|---|---|---|---|
| WO 2006067271 A | 29-06-2006 | EP | 1829291 A1 | 05-09-2007 |
| | | FI | 118291 B1 | 14-09-2007 |
| US 2002019951 A1 | 14-02-2002 | JP | 2002049605 A | 15-02-2002 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. ELSON ; L. GIROD ; D. ESTRIN.** Fine-Grained Network Time Synchronization using Reference Broadcasts. *Proceedings of the Fifth Symposium on Operating Systems Design and Implementation,* December 2002
- **S. GANERIWAL ; R. KUMAR ; M. B. SRIVASTAVA.** Timing-sync Protocol for Sensor Networks. *SenSys'03,* 05 November 2003
- **M. L. SICHITIU ; C. VEERARITTIPHAN.** Simple, Accurate Time Synchronization for Wireless Networks. *Proceedings of the IEEE Wireless Communications and Networking Conference,* 2003, 1266-1273
- **W. SU ; I. AKYILDIZ.** Time-Diffusion Synchronization Protocols for Sensor Networks. *IEEE/ACM Transactions on Networking,* April 2005, vol. 13 (2), 384-397